# EUROPEAN PATENT APPLICATION

(11) **EP 4 564 909 A1**
(43) Date of publication of application: **04.06.2025**
(21) Application number: 22952364.2
(22) Date of filing: 27.07.2022
(51) Int. Cl.: H04W 36/00

(54) **RANDOM ACCESS CONTROL METHODS AND APPARATUS**

(71) Applicant: Beijing Xiaomi Mobile Software Co., Ltd., Beijing 100085 (CN)
(72) Inventor: WU, Yumin, Beijing 100085 (CN); XIONG, Yi, Beijing 100085 (CN)
(74) Representative: Stöckeler, Ferdinand
(86) International application number: PCT/CN2022/108412
(87) International publication number: WO 2024/020902

(57) **Abstract**

Disclosed in the embodiments of the present application are random access control methods and apparatus, which can be applied to communication systems such as long term evolution (LTE) systems, fifth generation (5G) mobile communication systems, 5G new radio (NR) systems, and other future novel mobile communication systems. A method comprises: determining that a candidate cell or cell group configuration currently used by a terminal has changed; according to the changed candidate cell or cell group configuration, determining an activated target cell or cell group; and when a preset condition is met, initiating random access in a cell or cell group corresponding to the activated target cell or cell group. By means of implementing the embodiments of the present application, a terminal can initiate random access by means of the configuration of a network side device and a preset condition, so as to meet specific communication scenario requirements, thereby reducing communication resources, and avoiding resource waste.

## Description

### TECHNICAL FIELD

The present invention relates to the field of communication technologies, and particularly to a method and an apparatus for controlling random access.

### BACKGROUND

In wireless communication, when one or more candidate cell or cell group configurations are configured for a terminal by a network side, the terminal can initiate a random access procedure according to a configured trigger event. When the terminal changes the candidate cell or cell group configuration corresponding to a serving cell or cell group, how to initiate the random access procedure (and whether to initiate the random access procedure) is a problem that needs to be solved.

However, there is currently no means to determine how the terminal initiates the random access procedure.

### SUMMARY

Provided in the embodiments of the present invention are a method and an apparatus for controlling random access, which can be applied to communication systems such as long term evolution (LTE) systems, fifth generation (5G) mobile communication systems, 5G new radio (NR) systems, and other future novel mobile communication systems. By determining preparation duration of a side link, transmission of physical sidelink shared channel (PSSCH) data can be avoided before the PSSCH data is prepared, thereby saving resources and avoiding resource waste.

In a first aspect, disclosed in the embodiments of the present invention is a method for controlling random access. The method is performed by a terminal, and includes:
determining that a candidate cell or cell group configuration currently used by the terminal is changed;
determining an activated target cell or cell group based on a changed candidate cell or cell group configuration;
initiating random access in a cell or cell group corresponding to the activated target cell or cell group.

Optionally, determining that the candidate cell or cell group configuration currently used by the terminal is changed includes at least one of the followings:
determining that the candidate cell or cell group configuration currently used is changed in response to receiving change indication information sent by a network device;
determining that the candidate cell or cell group configuration currently used is changed based on a preconfigured condition.

Optionally, initiating the random access in the cell or cell group corresponding to the activated target cell or cell group includes:
in a case that a preset condition is met, initiating the random access in the cell or cell group corresponding to the activated target cell or cell group.

Optionally, in a case that at least one of the following is met, the preset condition is determined to be met:
the activated target cell or cell group having no available uplink timing advance (TA);
the terminal receiving indication information of the network device, wherein the indication information instructs the terminal to initiate the random access in the cell or cell group corresponding to the activated target cell or cell group;
the activated target cell or cell group having no available uplink TA, and the terminal receiving indication information of the network device; or
a connection failure occurring in the activated target cell or cell group or in a special cell or cell group.

Optionally, the indication information includes random access resource indication information.

Optionally, the random access resource indication information includes at least one of the followings:
a the random access resource preamble index;
a random access time-frequency resource index; or
a beam identifier corresponding to a random access resource.

In a second aspect, disclosed in the embodiments of the present application is another method for controlling random access. The method is performed by a network device, and includes:
configuring a candidate cell or cell group configuration for a terminal; and
changing the candidate cell or cell group configuration currently used by the terminal, and providing an activated target cell or cell group to cause the terminal to initiate random access in a cell or cell group corresponding to the activated target cell or cell group.

By means of implementing the embodiments of the present invention, the terminal can initiate random access by means of the configuration of the network side device and a preset condition, so as to meet preset communication scenario requirements, thereby saving communication resources, and avoiding resource waste.

Optionally, changing the candidate cell or cell group configuration currently used by the terminal includes:
sending change indication information to the terminal to enable the terminal to determine that the candidate cell or cell group configuration currently used is changed.

Optionally, the method further includes:
sending indicating information to the terminal, so that the terminal meets a preset condition, in which the indicating information instructs the terminal to initiate the random access in the cell or cell group corresponding to the activated target cell or cell group.

Optionally, the indication information includes random access resource indication information.

Optionally, the random access resource indication information includes at least one of the followings:
a the random access resource preamble index;
a random access time-frequency resource index; or
a beam identifier corresponding to a random access resource.

In a third aspect, the embodiments of the present invention provide a communication apparatus that has some or all of functions of the terminal in the method described in the first aspect above, for example, the communication apparatus may have the functions in some or all of the embodiments of the present invention or may have the functions for independently implementing any one of the embodiments of the present invention. The functions may be realized by hardware or by software which is executed by hardware. The hardware or software includes one or more units or modules corresponding to the above functions.

In one implementation, the communication apparatus may include a transceiver module and a processing module, in which the processing module is configured to support the communication apparatus to perform the corresponding functions in the above method, the transceiver module is configured to support a communication between the communication apparatus and other devices. The communication apparatus may also include a storage module, in which the storage module is configured to couple with the transceiver module and the processing module, and save a computer program and data necessary for the communication apparatus.

As an example, the processing module may be a processor, the transceiver module may be a transceiver or a communication interface, and the storage module be a memory. In one implementation, the communication apparatus includes:
a change determining module, configured to determine that a candidate cell or cell group configuration currently used by a terminal is changed;
a configuration determining module, configured to determine an activated target cell or cell group based on a changed candidate cell or cell group configuration;
a random access module, configured to initiate random access in a cell or cell group corresponding to the activated target cell or cell group.

In a fourth aspect, the embodiments of the present invention provide a communication apparatus that has some or all of functions of the network device in the method described in the second aspect above, for example, the communication apparatus may have the functions in some or all of the embodiments of the present invention or may have the functions for independently implementing any one of the embodiments of the present invention. The functions may be realized by hardware or by software which is executed by hardware. The hardware or software includes one or more units or modules corresponding to the above functions.

In one implementation, the structure of the communication apparatus may include a transceiver module and a processing module, in which the processing module is configured to support the communication apparatus to perform corresponding functions in the above method, and the transceiver module is configured to support a communication between the communication apparatus and other devices. The communication apparatus may also include a storage module, in which the storage module is configured to couple with the transceiver module and the processing module, and save a computer program and data necessary for the communication apparatus.

As an example, the processing module can be a processor, the transceiver module can be a transceiver or a communication interface, and the storage module can be a memory. In one implementation, the communication apparatus includes:
a configuring module, configured to configure a candidate cell or cell group configuration for a terminal;
a random access control module, configured to change the candidate cell or cell group configuration currently used by the terminal, and provide an activated target cell or cell group to cause the terminal to initiate random access in a cell or cell group corresponding to the activated target cell or cell group.

In a fifth aspect, the embodiments of the present invention provide a communication apparatus including a processor. When a computer program in a memory is called by the processor, the method in the first aspect is implemented.

In a sixth aspect, the embodiments of the present invention provide a communication apparatus including a processor. When a computer program in a memory is called by the processor, the method in the second aspect is implemented.

In a seventh aspect, the embodiments of the present invention provide a communication apparatus, including a memory for storing a computer program and a processor. When the computer program stored in the memory is executed by the processor, the communication apparatus is caused to implement the method in the first aspect.

In an eighth aspect, the embodiments of the present invention provide a communication apparatus, including a memory for storing a computer program and a processor. When the computer program stored in the memory is executed by the processor, the communication apparatus is caused to implement the method in the second aspect.

In a ninth aspect, the embodiments of the present invention provide a communication apparatus, including a processor and an interface circuit for receiving code instructions and sending the code instructions to the processor, in which the processor is configured to run the code instructions to cause the apparatus to perform the method in the first aspect.

In a tenth aspect, the embodiments of the present invention provide a communication apparatus, including a processor and an interface circuit for receiving code instructions and sending the code instructions to the processor, in which the processor is configured to run the code instructions to cause the apparatus to perform the method in the second aspect.

In an eleventh aspect, the embodiments of the present invention provide a random access control system. The system includes a communication apparatus described in the third aspect and a communication apparatus described in the fourth aspect, or the system includes a communication apparatus described in the fifth aspect and a communication apparatus described in the sixth aspect, or the system includes a communication apparatus described in the seventh aspect and a communication apparatus described in the eighth aspect, or the system includes a communication apparatus described in the ninth aspect and a communication apparatus described in the tenth aspect.

In a twelfth aspect, a computer-readable storage medium is provided in the embodiments of the present invention. The computer-readable storage medium is configured to store instructions used by the terminal. When the instructions are executed, the terminal is caused to perform the method as described in the first aspect.

In a thirteenth aspect, a computer-readable storage medium is provided in the embodiments of the present invention. The computer-readable storage medium is configured to store instructions used by the network device. When the instructions are executed, the network device is caused to perform the method as described in the second aspect.

In a fourteenth aspect, a computer program product including a computer program is provided in the embodiments of the present invention. When the computer program is running on a computer, the computer is caused to perform the method as described in the first aspect.

In a fifteenth aspect, a computer program product including a computer program is further provided in the embodiments of the present invention. When the computer program is running on a computer, the computer is caused to perform the method as described in the second aspect.

In a sixteenth aspect, a system on chip (SOC) is provided in the invention. The SOC includes at least one processor and an interface configured to support a terminal to perform functions involved in the first aspect, and for example, to determine or process at least one of data and information involved in the above methods. In a possible design, the SOC further includes a memory. The memory is configured to save a necessary computer program and data of a terminal. The SOC may consist of a chip, or may include a chip and other discrete devices.

In a seventeenth aspect, a system on chip (SOC) is provided in the invention. The SOC includes at least one processor and an interface configured to support a network device to perform functions involved in the second aspect, and for example, to determine or process at least one of data and information involved in the above methods. In a possible design, the SOC further includes a memory. The memory is configured to save a necessary computer program and data of a network device. The SOC may consist of a chip, or may include a chip and other discrete devices.

In an eighteenth aspect, a computer program is provided in the present invention. When the computer program is running on a computer, the computer is caused to perform the method as described in the first aspect.

In a nineteenth aspect, a computer program is provided in the present invention. When the computer program is running on a computer, the computer is caused to perform the method as described in the second aspect.

### BRIEF DESCRIPTION OF THE DRAWINGS

In order to explain embodiments of the invention or technical solutions in the related art more clearly, the drawings described in the embodiments of the invention or required in the related art are briefly introduced below.
FIG. 1 is a diagram illustrating an architecture of a communication system provided in an embodiment of the present invention;
FIG. 2 is a flowchart illustrating a method for controlling random access provided in an embodiment of the present invention;
FIG. 3 is a flowchart illustrating a method for controlling random access provided in an embodiment of the present invention;
FIG. 4 is a block diagram illustrating a communication apparatus provided in an embodiment of the present invention;
FIG. 5 is a block diagram illustrating a communication apparatus provided in another embodiment of the present invention;
FIG. 6 is a block diagram of a chip provided in an embodiment of the present invention.

### DETAILED DESCRIPTION

For ease of understanding, terms involved in the invention are introduced first.

### 1. Downlink Control Information (DCI)

DCI is carried by a physical downlink control channel (PDCCH). The DCI may include uplink and downlink resource allocation, hybrid automatic repeat request (HARQ) information, power control, etc. PDCCH is a physical channel used to carry downlink scheduling information.

### 3. Media Access Control Control Element (MAC CE)

MAC CE is a way to exchange control information between a terminal and a network. As the name suggests, it exchanges control information about the MAC layer.

In order to understand the method for controlling random access disclosed in embodiments of the present invention better, a communication system to which the embodiments of the present invention are applicable is described below.

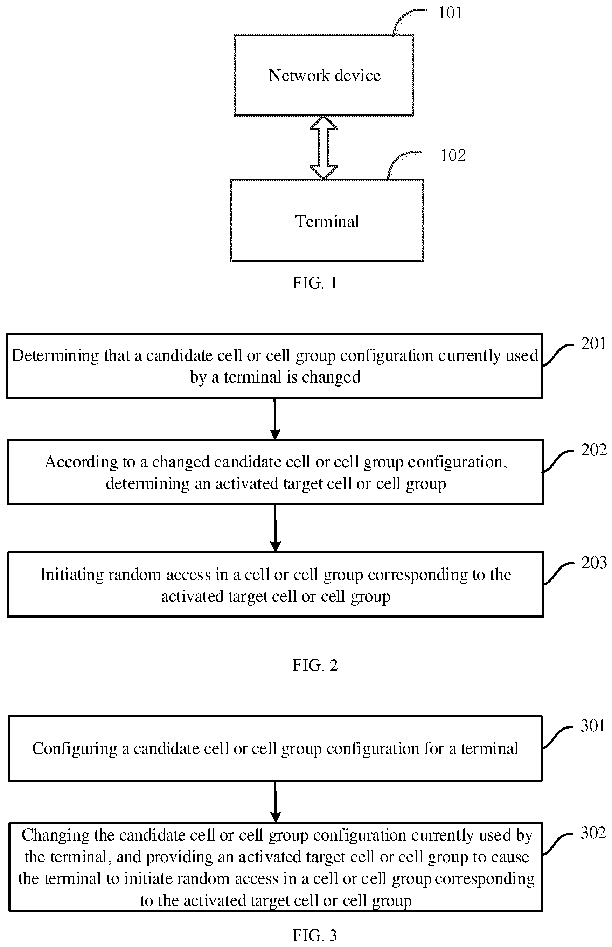

As illustrated in FIG. 1, which is a diagram illustrating an architecture of a communication system provided in an embodiment of the present invention. The communication system may include, but is not limited to, one network device and one terminal. The number and form of devices shown in FIG. 1 are only shown as an example, and do not constitute a limitation on the embodiments of the present invention. The communication system may include two or more network devices and two or more terminals in a practical application. The communication system in FIG. 1 including one network device 101 and one terminal 102 is shown as an example.

It needs to be noted that the technical solution in the embodiments of the present invention may be applicable to various communication systems, for example, a long term evolution (LTE) system, a 5th generation (5G) mobile communication system, a 5G new radio (NR) system or other future new mobile communication systems. It should also be noted that the side link in the embodiments of the present invention may also be called a sidelink or a direct link.

The network device 101 in the embodiments of the present invention is an entity on the network side for sending or receiving signals. For example, the network device 101 may be an evolved NodeB (eNB), a transmission reception point (TRP), a next generation NodeB (gNB) in an NR system, a base station in other mobile communication system in the future, or an access node in a wireless fidelity (Wi-Fi) system. The embodiments of the present invention do not limit the specific technology and the specific device form used by the network device. The network device in the embodiments of the present invention may include a central unit (CU) and a distributed unit (DU), in which the CU may also be called a control unit. A protocol layer of the network device, for example, a base station, may be divided by adopting the CU-DU structure. Some functions of the protocol layer are centrally controlled by the CU, and some or all of remaining functions of the protocol layer are distributed in the DU, which is centrally controlled by the CU.

The terminal 102 in the embodiments of the present invention is an entity on the user side for receiving or sending signals, such as a mobile phone. Terminal may also be called a user equipment (UE), a mobile station (MS), a mobile terminal (MT), etc. Terminal may be a car with communication function, a smart car, a mobile phone, a wearable device, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The embodiments of the present invention do not limit the specific technology and the specific device form used by the terminal.

Due to the use of dual connectivity (DC) architecture in a 5G system, there are two cell (or cell group) groups:
Master cell (or cell group) group (MCG): corresponding to the master node (MN) on the network side;
Secondary cell (or cell group) group (SCG): corresponding to the secondary node (SN) on the network side.

The MCG includes one primary cell (PCell) or Cell group and one or more secondary cells (SCells) or cell groups. The SCG includes one primary secondary cell (PSCell) or cell group and one or more SCells. PCell and PSCell are collectively referred to as Special cells (SpCells).

In a communication system, the network device can provide multiple candidate cells or cell groups to the terminal. The network device can then use L1 (such as DCI) or L2 (such as MAC CE) signaling to control the terminal to make changes in multiple candidate cells or cell groups (for example, change the working cell (or cell group) from the "candidate cell (or cell group) -1" to the "candidate cell (or cell group) -2").

One serving cell (or cell group) can correspond to one or more "candidate cells (or cell groups)".

The terminal can obtain a "preconfigured condition" and a "preconfigured cell (or cell group)" corresponding to the condition from the network device. When the terminal meets the "preconfigured condition" (for example, a specific measurement event), the terminal changes the serving cell (or cell group) to "the preconfigured cell (or cell group)".

The random access procedure refers to a process starting from attempting to access a network by sending a random access preamble to establishing a basic signaling connection with the network. Random access is a very important step in the mobile communication system, and it is also the last step to establish a communication link between the terminal and the network device. The terminal exchanges information with a base station through the random access to complete subsequent operations, such as calls, resource requests, and data transmission, etc. Meanwhile, the terminal realizes uplink time synchronization with the system through the random access. The performance of random access directly affects the user experience.

However, in a case that the terminal meets the "preconfigured condition" (for example, the specific measurement event) and the terminal changes the serving cell (or cell group) to the "preconfigured cell (or cell group)", there is no means to determine the specific manner in which the terminal initiates the random access procedure.

It should be understood that the communication system in the embodiments of the present invention is to more clearly illustrate the technical solution of the embodiments of the present invention, and does not constitute a limitation on the technical solution in the embodiments of the present invention. Those skilled in the art may know, with the evolution of the system architecture and the emergence of new service scenarios, the technical solution in the embodiments of the present invention is also applicable to similar technical problems.

The method and apparatus for controlling random access provided in the present invention are introduced in detail in combination with the attached drawings.

As illustrated in FIG. 2, which is a flowchart illustrating a method for controlling random access in an embodiment of the present invention. The method is performed by a terminal. As illustrated in FIG. 2, the method may include but not limited to the following steps.

At step 201, it is determined that a candidate cell or cell group configuration currently used by the terminal is changed.

In the embodiments of the present invention, a communication system adopts a dual connectivity (DC) architecture, which includes a master cell group (MCG) and a secondary cell group (SCG). In the MCG, there may be many Cells, one of which is a primary cell (PCell) for initiating the initial access. The PCell is the most important cell in the MCG. The PCell in the MCG and the SCell in the MCG are aggregated by carrier aggregation (CA). There is also the most important cell in the SCG, that is, the primary secondary cell (PSCell). The PSCell is the cell that initiates the initial access in the SCG. The PSCell in the SCG and the SCell in the SCG are also aggregated by CA. Cell refers to an area covered by a base station or a part of a base station in the communication system. In the area the terminal can communicate reliably with the base station through a wireless channel. To configure the cell or cell group for communication for the terminal, the network device configures the corresponding candidate cell or cell group for the terminal through a configuration message.

In the current system, each cell (or cell group) is assigned with one serving cell (or cell group) configuration (for example, ServingCellConfig). The serving cell (or cell group) configuration is associated with a serving cell (or cell group) index (for example, ServCellIndex) that uniquely identifies one serving cell (or cell group) within the terminal. The serving cell (or cell group) of the PCell is identified as 0. One serving cell (or cell group) is associated with one hybrid automatic repeat request (HARQ) entity that includes multiple HARQ processes.

In a case that the terminal is operating, one or more candidate cells or cell groups are configured. When the terminal determines that the candidate cell or cell group configuration currently used is changed, it indicates that the serving cell needs to be changed to the cell (or cell group) pre-configured by the network device, that is, a target cell or cell group. At step 202, an activated target cell or cell group is determined based on a changed candidate cell or cell group configuration.

In the embodiments of the present invention, the changed candidate cell or cell group configuration includes the target cell or cell group. In order to initiate random access to the target cell or cell group, it is necessary to activate the target cell or cell group so that the target cell or cell group enters the activated state.

At step 203, random access is initiated in a cell or cell group corresponding to the activated target cell or cell group.

In the embodiments of the present invention, after the terminal determines the activated target cell or cell group, it can initiate random access in the cell or cell group corresponding to the activated target cell or cell group to establish a wireless link with the cell or cell group corresponding to the target cell or cell group for data interoperation. Uplink resources may be requested from or uplink synchronization may be realized with the cell or cell group corresponding to the activated target cell or cell group.

Optionally, determining that the candidate cell or cell group configuration currently used by the terminal is changed includes at least one of the following.

Determining that the candidate cell or cell group configuration currently used is changed in response to receiving change indication information sent by a network device.

In the embodiments of the present invention, the terminal can directly change the currently used candidate cell or cell group configuration according to change indication information sent by the network device (for example, change the PCell configuration of the terminal from candidate cell (or cell group) configuration -1 to candidate cell (or cell group) configuration -2.).

Determining that the candidate cell or cell group configuration currently used is changed based on a preconfigured condition.

In the embodiments of the present invention, the terminal can also determine that the currently used candidate cell or cell group configuration is changed based on the preconfigured condition provided by the network device and the "preconfigured cell (or cell group)" corresponding to the preconfigured condition. In a case that the terminal meets the preconfigured condition (for example, a specific measurement event), the terminal changes the serving cell (or cell group) to the "preconfigured cell (or cell group)". The conditional triggered mobility process includes at least one of the following.

Conditional Handover (CHO), that is, a handover performed by the terminal when one or more handover execution conditions are met.

Conditional PSCell Addition (CPA), that is, a new PSCell (or cell group) is added when one or more handover execution conditions are met.

Conditional PSCell Change (CPC), that is, a new PSCell (or cell group) is changed when one or more handover execution conditions are met.

In the present invention, a method for controlling random access is proposed, including:
determining the corresponding candidate cell or cell group according to one or more candidate cell or cell group configurations provided by the network device.

In the present invention, a method for controlling random access is proposed, including:
determining that a candidate cell or cell group configuration currently used by the terminal is changed.

In the embodiments, in a case that the terminal is operating, one or more candidate cells or cell groups are configured. After the terminal determines that the candidate cell or cell group configuration currently used is changed, it indicates that the serving cell needs to be changed to the cell (or cell group) pre-configured by the network device, that is, the target cell or cell group.

In a possible embodiment, the terminal determines the corresponding candidate cell or cell group based on one or more candidate cell or cell group configurations provided by the network device.

In the present invention, a method for controlling random access is proposed, including:
initiating random access in the cell or cell group corresponding to the activated target cell or cell group.

In the embodiments of the present invention, the terminal initiates random access in the cell or cell group corresponding to the activated target cell or cell group to establish a wireless link with the cell or cell group corresponding to the target cell or cell group for data interoperation. Uplink resources may be requested from or uplink synchronization may be realized with the cell or cell group corresponding to the activated target cell or cell group.

In the present invention, a method for controlling random access is proposed, including:
in a case that a preset condition is met, initiating random access in the cell or cell group corresponding to the activated target cell or cell group.

In the embodiments of the present invention, the network device preconfigures the preset condition for the terminal according to the usage scenario. When the preset condition is met, it means that the terminal meets a condition for random access to the cell or cell group corresponding to the changed target cell or cell group. Random access is initiated in the cell or cell group corresponding to the activated target cell or cell group so as to establish the communication link, thereby meeting the requirements of the specific communication scenario.

All embodiments of the present invention may be implemented individually or together, which are not limited in the present embodiments.

Optionally, in a case that at least one of the following is met, the preset condition is determined to be met.

The activated target cell or cell group has no available uplink timing advance (TA).

In the embodiments of the present invention, a triggering event for the random access procedure includes:
initiating initial access in RRC_IDLE;
an RRC connection reconstruction procedure;
in a case that the uplink synchronization status is un-synchronization, downlink or uplink data arriving;
in a case that no physical uplink control channel (PUCCH) resource is available for transmission of a scheduling request (SR), uplink data arriving;
failing to send the SR;
synchronous reconfiguration requested through RRC (e.g., handover);
initiating a connection recovery procedure in RRC_INACTIVE;
establishment of uplink timing for a secondary timing advance group (STAG);
a request to send additional system information (SI);
beam failure recovery;
continuous uplink channel access failures on the SpCell;
initiating a small data transmission (SDT) procedure in RRC_INACTIVE;
requesting for a random access procedure in a connected state for positioning purpose, for example, TA is required for terminal positioning purpose.

The preset condition is set according to the above trigger events of the random access procedure, so that the terminal can meet the preset condition and initiate the random access procedure under the scenario of meeting the above trigger events.

After receiving a downlink signal, the terminal can determine a position of a downlink signal sub-frame. To avoid uplink interference, the network device needs to ensure that signals sent by different terminals arrive at a fixed time. Therefore, the network device may configure an uplink timing advance (TA) for the uplink transmission of the terminal. After the terminal receives a TA value, in a case that the terminal wants to send an uplink signal, the terminal sends the uplink signal by advancing with the TA time value with reference to the position of the downlink sub-frame.

In terms of obtaining the TA value, the terminal may obtain the TA value only when it is in an uplink out-of-synchronization state. Therefore, the terminal can trigger the random access procedure or the network device can trigger the terminal to initiate the random access procedure. The physical random access channel (PRACH) on which the random access request message of the random access procedure is sent uses an initial default TA value specified in the protocol (for example, TA=0). The network device delivers the TA value to the terminal in a random access response.

In terms of maintenance of the TA value, since the terminal position is constantly changing, it is necessary to maintain the validity of the TA value. During the maintenance of the TA value on the network device, a timer (timeAlignmentTimer) may be set for the TA value of the terminal. The timer is started when the TA command is sent to the terminal. The network device sends a new TA value to the terminal before the timer expires. During the maintenance of the TA value of the terminal, the timer set according to the network device is started or restarted when the TA value is received. When the timer expires, the TA value is considered invalid, and the terminal enters the uplink out-of-synchronization state and cannot send uplink signals in the out-of-synchronization cell.

The terminal may be configured with multiple cells, and the uplink TAs of different cells may be different. Therefore, cells with different TA values may be classified into different TA groups (TAGs). The TAG of cells with the TA value identical to the SpCell is configured as the primary timing advance group (PTAG), and the TAG of cells with the TA value identical to the SCell is configured as STAG.

In a case that the activated target cell or cell group has no available uplink TA, the terminal can determine that the preset condition is met.

Indication information of the network device is received, in which the indication information instructs the terminal to initiate random access in the cell or cell group corresponding to the activated target cell or cell group.

In the embodiments of the present invention, in a case that the terminal receives the indication information from the network device and the indication information instructs the terminal to initiate random access in the cell or cell group corresponding to the activated target cell or cell group, the preset condition can be determined to be met. The terminal may initiate random access in the cell or cell group corresponding to the activated target cell or cell group.

The activated target cell or cell group has no available uplink TA, and the terminal receives the indication information of the network device.

A connection failure occurs in the activated target cell or cell group or in a special cell or cell group.

In the embodiments of the present invention, the connection failure of the terminal includes the following types: handover failure (for example, the handover is not completed within a specified time period (for example, the Timer t304 times out)); SCG change failure (for example, accessing to a new secondary cell group (SCG) is not completed within a specified time period (for example, the Timer t307 times out)); cell change failure (for example, the cell change is not completed within the specified time period); cell activation failure (for example, cell activation is not completed within the specified time period); radio link failure (RLF).

The RLF includes at least one of the following: physical layer out-of-synchronization (for example, the Timer t310 times out); random access failure of the MAC layer (for example, the maximum number of random access attempts is reached); an indication indicating that the radio link control (RLC) sub-layer reaches the maximum number of retransmissions (for example, the maximum number of retransmissions of the maximum RLC layer is reached); beam failure (for example, a beam failure detection mechanism detects that the beam failure occurs (for example, a beam failure counter reaches a threshold)).

Optionally, the above connection failure may be defined for the candidate cell (or cell group) of the SpCell.

Optionally, the indication information includes random access resource indication information.

In the embodiments of the present invention, the indication information includes the random access resource indication information for indicating a channel resource used in the random access procedure for the terminal.

In a possible embodiment, the indication information is carried by MAC CE or DCI and sent to the terminal.

Optionally, the random access resource indication information includes at least one of the following:
a random access resource preamble index;
a random access time-frequency resource index; or
a beam identifier corresponding to a random access resource.

In the embodiments of the present invention, the terminal transmits a random access time-frequency resource index (e.g., PRACH resource index) to the optimal beam of gNB in the random access resource preamble index (e.g., preamble index). The beam identifier corresponding to the random access resource includes at least one of the following:
a synchronous Signal Block (SSB) identifier; or
a channel state information reference signal (CSI-RS) identifier.

By means of implementing the embodiments of the present invention, a terminal can initiate random access by means of the configuration of a network device and a preset condition, so as to meet preset communication scenario requirements, thereby saving communication resources, and avoiding resource waste.

As illustrated in FIG. 3, which is a flowchart illustrating a method for controlling random access in an embodiment of the present invention. The method is performed by a terminal. As illustrated in FIG. 3, the method may include but not limited to the following steps.

At step 301, a candidate cell or cell group configuration is configured for a terminal.

In the embodiments of the present invention, the network device will configure a corresponding candidate cell or cell group configuration for the terminal in advance to configure a corresponding candidate cell or cell group for the network device. For example, the candidate cell (or cell group) configuration is provided through an RRC reconfiguration message.

Each cell (or cell group) is assigned with one serving cell (or cell group) configuration (for example, ServingCellConfig). The serving cell (or cell group) configuration is associated with a serving cell (or cell group) index (for example, ServCellIndex) that uniquely identifies one serving cell (or cell group) within the terminal. The serving cell (or cell group) of the PCell is identified as 0. One serving cell (or cell group) is associated with one hybrid automatic repeat request (HARQ) entity that includes multiple HARQ processes.

When the terminal determines that the candidate cell or cell group configuration currently used is changed, it indicates that the serving cell needs to be changed to the cell (or cell group) pre-configured by the network device, that is, a target cell or cell group.

At step 302, the candidate cell or cell group configuration currently used by the terminal is changed, and an activated target cell or cell group is provided, to cause the terminal to initiate random access in a cell or cell group corresponding to the activated target cell or cell group.

In the embodiments of the present invention, the network device can cause the candidate cell or cell group configuration currently used by the terminal to change through a configuration indication, and provide the activated target cell or cell group. The terminal initiates the random access procedure in the activated target cell or cell group and establishes a communication link with the activated target cell or cell group.

By means of implementing the embodiments of the present application, a terminal can initiate random access by means of the configuration of a network device and a preset condition, so as to meet preset communication scenario requirements, thereby saving communication resources, and avoiding resource waste.

In the present invention, a method for controlling random access is proposed, including:
changing the candidate cell or cell group configuration currently used by the terminal, and providing an activated target cell or cell group to cause the terminal to initiate random access in a cell or cell group corresponding to the activated target cell or cell group in case of meeting a preset condition.

In the embodiments of the present invention, the network device can cause the candidate cell or cell group configuration currently used by the terminal to change through the configuration indication, and provide the activated target cell or cell group. The terminal determines whether to initiate the random access procedure for the activated target cell or cell group based on the preset condition. In a case that the preset condition is met, the terminal can initiate the random access procedure in the activated target cell or cell group and establish a communication link with the activated target cell or cell group.

Optionally, changing the candidate cell or cell group configuration currently used by the terminal includes:
sending change indication information to the terminal to enable the terminal to determine that the candidate cell or cell group configuration currently used is changed.

In the embodiments of the present invention, the network device sends the change indication information to the terminal so that the terminal change the candidate cell or cell group configuration currently used (For example, change a PCell configuration of the terminal from candidate cell (or cell group) configuration -1 to candidate cell (or cell group) configuration -2.).

Optionally, the change indication information is carried by the MAC CE or DCI.

Optionally, the method also includes:
sending indication information to the terminal so that the terminal meets the preset condition, in which the indication information instructs the terminal to initiate the random access in the cell or cell group corresponding to the activated target cell or cell group.

Optionally, the indication information includes random access resource indication information.

In the embodiments of the present invention, the indication information sent by the network device includes the random access resource indication information for indicating a channel resource used in the random access procedure for the terminal.

Optionally, the random access resource indication information includes at least one of the following:
a random access resource preamble index;
a random access time-frequency resource index; or
a beam identifier corresponding to a random access resource.

In the embodiments of the present invention, the terminal transmits a random access time-frequency resource index (e.g., PRACH resource index) to the optimal beam of gNB in the random access resource preamble index (e.g., preamble index). The beam identifier corresponding to the random access resource includes at least one of the following:
a synchronous Signal Block (SSB) identifier; or
a channel state information reference signal (CSI-RS) identifier.

By means of implementing the embodiments of the present invention, a terminal can initiate random access by means of the configuration of a network device and a preset condition, so as to meet preset communication scenario requirements, thereby saving communication resources, and avoiding resource waste.

In the above embodiments of the present invention, the methods provided by the embodiments of the present invention are introduced from the perspectives of the network device and the terminal, respectively. In order to implement the various functions in the methods provided by the embodiments of the present invention, the network device and the terminal each may include a hardware structure or a software module, and implement the above various functions in the form of a hardware structure, a software module, or a hardware structure plus a software module. Any of the above functions may be implemented in the form of a hardware structure, a software module, or a hardware structure plus a software module.

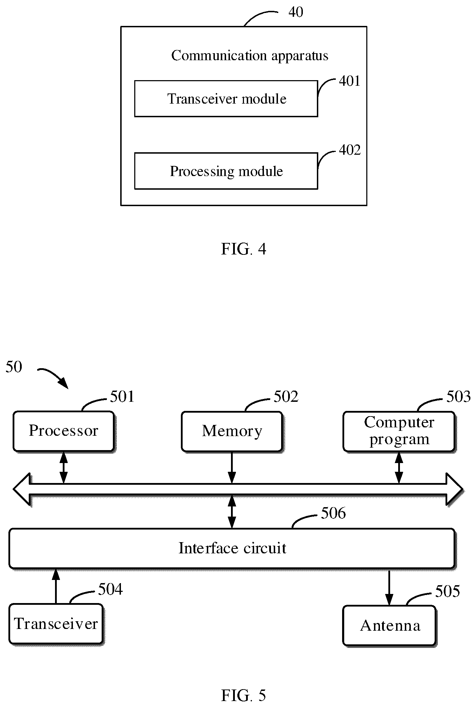

As illustrated in FIG. 4, which is a diagram illustrating a structure of a communication apparatus 40 provided in an embodiment of the present invention. The communication apparatus 40 as illustrated in FIG. 4 may include a transceiver module 401 and a processing module 402. The transceiver module 401 may include a sending module and/or a receiving module, in which the sending module is used to achieve the sending function, and the receiving module is used to achieve the receiving function. The transceiver module 401 may achieve the sending function and/or the receiving function.

The communication apparatus 40 may be a terminal (for example the terminal in the preceding embodiments of the method), an apparatus in the terminal, or an apparatus capable of being used in combination with the terminal. Or, the communication apparatus 40 may be a network device (for example the network device in the preceding embodiments of the method), an apparatus in the network device, or an apparatus capable of being used in combination with the network device.

The communication apparatus 40 is the terminal (for example the terminal in the preceding embodiments of the method), including:
a change determining module, configured to determine that a candidate cell or cell group configuration currently used by the terminal is changed;
a configuration determining module, configured to determine an activated target cell or cell group based on a changed candidate cell or cell group configuration;
a random access module, configured to initiate random access in a cell or cell group corresponding to the activated target cell or cell group.

The communication apparatus 40 is the network device, including:
a configuring module, configured to configure a candidate cell or cell group configuration for a terminal;
a random access control module, configured to change the candidate cell or cell group configuration currently used by the terminal, and provide an activated target cell or cell group to cause the terminal to initiate random access in a cell or cell group corresponding to the activated target cell or cell group.

As illustrated in FIG. 5, which is a diagram illustrating a structure of another communication apparatus 50 provided in an embodiment of the present invention. The communication apparatus 50 may be a network device, a terminal (for example the terminal in the preceding embodiments of the method), a chip, a system on chip or a processor that supports the network device to implement the method, or a chip, a system on chip or a processor that supports the terminal to implement the method. The apparatus may be configured to implement the method described in the method embodiments. For details, please refer to the above method embodiments.

The communication apparatus 50 may include one or more processors 501. The processor 501 may include a general purpose processor or a dedicated processor. For example, the processor 501 may be a baseband processor or a central processor. The baseband processor may be configured to process a communication protocol and communication data, and the central processor may be configured to control a communication apparatus (e.g., a base station, a baseband chip, a terminal, a terminal chip, a DU or CU, etc.), to execute a computer program, and process data of the computer program.

Optionally, the communication apparatus 50 may further include one or more memories 502 with a computer program 503 stored thereon. The processor 501 executes the computer program 503 so that the communication apparatus 50 performs the method as described in the above method embodiments. Optionally, the memory 502 may further store data. The communication apparatus 50 and the memory 502 may be independently configured or integrated together.

Optionally, the communication apparatus 50 may further include a transceiver 504 and an antenna 505. The transceiver 504 may be referred to as a transceiving unit, a transceiver or a transceiving circuit, which may be configured to achieve a transceiving function. The transceiver 504 may include a receiver and a transmitter. The receiver may be referred to as a receiver or a receiving circuit, etc., for implementing a receiving function; the transmitter may be referred to as a transmitter or a transmission circuit, etc. for implementing a transmission function.

Optionally, the communication apparatus 50 may further include one or more interface circuits 506. The interface circuit 506 is configured to receive code instructions and transmit the code instructions to the processor 501. The processor 501 runs the code instructions so that the communication apparatus 50 performs the method as described in the above method embodiment.

The communication apparatus 50 is a terminal (for example the terminal in the preceding embodiments of the method): the processor 501 is configured to execute step 201, step 202 and step 203 in FIG. 2.

The communication apparatus 50 is a network device: the transceiver 504 is configured to execute steps 301 and 302 in FIG. 3.

In an implementation, the processor 501 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the processor 501 may be stored with a computer program 503. The computer program 503 runs on the processor 501 so that the communication apparatus 50 performs the method as described in the above method embodiments. The computer program 503 may be solidified in the processor 501, in which case the processor 501 may be implemented by hardware.

In an implementation, the communication apparatus 50 may include a circuit that may implement a transmitting or receiving or communication function in the above method embodiments. The processor and the transceiver described in the invention may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may also be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs), etc.

The communication apparatus described in the above embodiments may be a network device or a terminal (for example the terminal in the preceding embodiments of the method), but the scope of the communication apparatus described in the present invention is not limited thereto, and a structure of the communication apparatus may not be subject to FIG. 4. The communication apparatus may be a stand-alone device or may be a part of a larger device. For example, the communication apparatus may be:
(1) a stand-alone integrated circuit (IC), or a chip, or a system on chip or a subsystem;
(2) a set of one or more ICs, which, optionally, may also include a storage component configured to store data and a computer program;
(3) an ASIC, such as a Modem;
(4) a module that may be embedded within other devices;
(5) a receiver, a terminal, a smart terminal, a cellular phone, a wireless device, a handset, a mobile unit, an in-vehicle device, a network device, a cloud device, an artificial intelligence device, etc.; and
(6) others, and so forth.

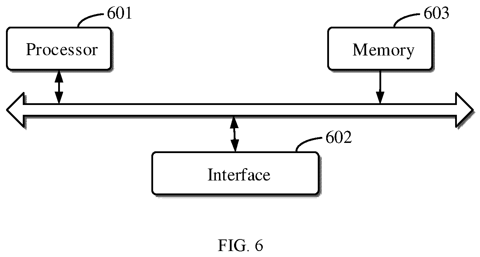

For the case that the communication apparatus may be a chip or a system on chip, please refer to a diagram of a structure of a chip as illustrated in FIG. 6. The chip illustrated in FIG. 6 may include a processor 601 and an interface 602. There may be one or more processors 601, and there may be a plurality of interfaces 602.

Optionally, the chip further includes a memory 603. The memory 603 is configured to save a computer program and data.

Those skilled in the related art may understand that, various illustrative logical blocks and steps listed in embodiments of the present invention, may be implemented by electronic hardware, computer software or a combination of electronic hardware and computer software. Whether the function is implemented by hardware or software depends on specific applications and design requirements for an overall system. Those skilled in the art may implement the functions by using various methods for each specific application, but such an implementation should not be understood as beyond the protection scope of the embodiments of the present invention.

A system for controlling random access is further provided in embodiments of the invention. The system includes a communication apparatus serving as a terminal (for example the terminal in the preceding embodiments of the method) in the embodiments of FIG. 4 and a communication apparatus serving as a network device, or the system includes a communication apparatus serving as a terminal (for example the terminal in the preceding embodiments of the method) in the embodiments of FIG. 4 and a communication apparatus serving as a network device.

A readable storage medium with instructions stored thereon is further provided in the invention. When the instructions are executed by a computer, the steps in any of the method embodiments are implemented.

A computer program product is further provided. The computer program product implements functions of any of the above method embodiments when executed by a processor.

In the above embodiments, the functions may be wholly or partially implemented by software, hardware, firmware, or any combination thereof. When implemented by software, the functions may be implemented in whole or in part in the form of a computer program product. The computer program product includes one or more computer programs. Procedures or functions according to embodiments of the present invention are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another in a wire (e.g., a coaxial cable, an optical fiber, a digital subscriber line (DSL)) or wireless (e.g., infrared, wireless, microwave) manner. The computer-readable storage medium may be any available medium that may be accessed by a computer or a data storage device, such as a server and a data center, that integrates one or more available media. The available media may be magnetic media (e.g., floppy disks, hard disks, magnetic tapes), optical media (e.g., high-density digital video discs (DVDs)), or semiconductor media (e.g., solid state disks, SSD)) etc.

Those skilled in the art may understand that various numbers such as first and second involved in the invention are distinguished merely for convenience of description, and are not intended to limit the scope of the embodiments of the invention, but also to indicate an order of precedence.

At least one in the present invention may also be described as one or more, and a plurality of may be two, three, four or more, which is not limited in the present invention. In embodiments of the present invention, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Corresponding relationships indicated by tables in the present invention may be configured or predefined. Values of information in tables are only examples, and may be configured as other values, which are not limited in the invention. When corresponding relationships between information and parameters are configured, it is not always necessary to configure all corresponding relationships indicated in tables. For example, in the tables in the present invention, corresponding relationships indicated by some rows may not be configured. For another example, appropriate transformations and adjustments, such as splitting and merging, may be made based on the above tables. Names of parameters shown in headers in the tables may be other names understandable by the communication apparatus, and values or representations of the parameters may be other values or representations understandable by the communication apparatus. When the above tables are implemented, other data structures may be used, and for example, arrays, queues, containers, stacks, linear lists, pointers, linked lists, trees, graphs, structures, classes, heaps or hash tables may be used.

Predefined in the invention may be understood as defined, predefined, stored, prestored, pre-negotiated, pre-configured, solidified or pre-fired.

Those skilled in the related art may realize that, the units and algorithm steps of each example described in conjunction with the embodiments disclosed herein may be implemented in electronic hardware or a combination of electronic hardware and computer software. Whether the functions are executed by hardware or software depends on a specific application and a design constraint of the technical solution. Those skilled in the art may adopt different methods for each specific application to implement the described functions, but such implementation should not be considered beyond the scope of the present invention.

Those skilled in the art may clearly understand that, specific working processes of systems, apparatuses and units described above may refer to corresponding processes in the above method embodiments, which will not be repeated here.

The above are only implementations of the invention, but the protection scope of the invention is not limited thereto. Any changes or substitutions that may be easily considered by those skilled in the art within the scope of the present invention should be covered by the scope of protection of the invention. Therefore, the protection scope of the present invention should be subject to the protection scope of claims.

## Claims

1. A method for controlling random access, performed by a terminal, comprising:
determining that a candidate cell or cell group configuration currently used by the terminal is changed;
determining an activated target cell or cell group based on a changed candidate cell or cell group configuration;
initiating random access in a cell or cell group corresponding to the activated target cell or cell group.

2. The method according to claim 1, wherein determining that the candidate cell or cell group configuration currently used by the terminal is changed comprises at least one of:
determining that the candidate cell or cell group configuration currently used is changed in response to receiving change indication information sent by a network device; or
determining that the candidate cell or cell group configuration currently used is changed based on a preconfigured condition.

3. The method according to claim 1, wherein initiating the random access in the cell or cell group corresponding to the activated target cell or cell group comprises:
in a case that a preset condition is met, initiating the random access in the cell or cell group corresponding to the activated target cell or cell group.

4. The method according to claim 3, wherein in a case that at least one of the followings is met, the preset condition is determined to be met:
the activated target cell or cell group having no available uplink timing advance (TA);
the terminal receiving indication information of a network device, wherein the indication information instructs the terminal to initiate the random access in the cell or cell group corresponding to the activated target cell or cell group;
the activated target cell or cell group having no available uplink TA, and the terminal receiving indication information of the network device; or
a connection failure occurring in the activated target cell or cell group or in a special cell or cell group.

5. The method according to claim 4, wherein the indication information includes random access resource indication information.

6. The method according to claim 5, wherein the random access resource indication information comprises at least one of:
a random access resource preamble index;
a random access time-frequency resource index; or
a beam identifier corresponding to a random access resource.

7. A method for controlling random access, performed by a network device, comprising:
configuring a candidate cell or cell group configuration for a terminal; and
changing the candidate cell or cell group configuration currently used by the terminal, and providing an activated target cell or cell group to cause the terminal to initiate random access in a cell or cell group corresponding to the activated target cell or cell group.

8. The method according to claim 7, wherein changing the candidate cell or cell group configuration currently used by the terminal comprises:
sending change indication information to the terminal to enable the terminal to determine that the candidate cell or cell group configuration currently used is changed.

9. The method according to claim 7, further comprises:
sending indication information to the terminal,
wherein the indication information instructs the terminal to initiate the random access in the cell or cell group corresponding to the activated target cell or cell group.

10. The method according to claim 9, wherein the indication information includes random access resource indication information.

11. The method according to claim 10, wherein the random access resource indication information comprises at least one of:
a random access resource preamble index;
a random access time-frequency resource index; or
a beam identifier corresponding to a random access resource.

12. A communication apparatus, applied to a terminal, comprising:
a change determination module, configured to determine that a candidate cell or cell group configuration currently used by the terminal is changed;
a configuration determination module, configured to determine an activated target cell or cell group based on a changed candidate cell or cell group configuration;
a random access module, configured to initiate random access in a cell or cell group corresponding to the activated target cell or cell group.

13. A communication apparatus, applied to a network device, comprising:
a configuration module, configured to configure a candidate cell or cell group configuration for a terminal;
a random access control module, configured to change the candidate cell or cell group configuration currently used by the terminal, and providing an activated target cell or cell group to cause the terminal to initiate random access in a cell or cell group corresponding to the activated target cell or cell group.

14. A communication apparatus, comprising a memory and a processor, wherein a computer program stored on the memory and runnable on the processor to enable the apparatus to perform a method according to any one of claims 1 to 6.

15. A communication apparatus, comprising a memory and a processor, wherein a computer program stored on the memory and runnable on the processor to enable the apparatus to perform a method according to any one of claims 7 to 11.

16. A computer-readable storage medium, wherein an instruction is stored on the computer-readable storage medium, and when the instruction is executed, a method according to any one of claims 1 to 6 is implemented.

17. A computer-readable storage medium, wherein an instruction is stored on the computer-readable storage medium, and when the instruction is executed, a method according to any one of claims 7 to 11 is implemented.
